# EUROPEAN PATENT APPLICATION

(11) **EP 2 670 123 A1**
(43) Date of publication of application: **04.12.2013**
(21) Application number: 13169440.8
(22) Date of filing: 28.05.2013
(51) Int. Cl.: H04N 1/00

(54) **Information processing apparatus and method for processing information**

(30) Priority: 30.05.2012 JP 2012123574
(71) Applicant: Oki Data Corporation, Tokyo 108-8551 (JP)
(72) Inventor: Yuasa, Eisuke, Tokyo, 108-8551 (JP)
(74) Representative: Betten & Resch

(57) **Abstract**

An information processing apparatus copies data from a source to a target. The target includes target identifying information. The source includes a memory (30) configured to store a source-side table (31) that holds a plurality of records. One of the plurality of records contains target identifying information. A copying section (72, 20a, 22a) is configured to delete the one of the plurality of records from the sour-side table, and copy the source-side table (31) into the target after the one of the plurality of records containing target identifying information has been deleted from the source-side table.

## Description

### BACKGROUND OF THE INVENTION

### FIELD OF THE INVENTION

The present invention relates to a method and an information processing apparatus for copying the records in a database of a source into the database of a target.

### DESCRIPTION OF THE RELATED ART

A database management system manages a variety of items of data. When data are copied form an apparatus to another, the database management system performs a variety of types of processing. For example, a technique is known in which when records are copies from a source to a target (e.g., from apparatus "A" to apparatus "B"), access to the records to be copied is restricted without a special operation.

For example, Japanese Patent Laid-Open No. 2004-94297 discloses one such technique. When a record is copied from a source to a target, a copy identification information is registered which indicates that the record is copied. When the record is accessed, the copy identification information is first checked, thereby restricting access to the record.

An existing database managing system suffers from the following drawbacks. When the entire identification information (e.g., telephone directory which is a collection of records) is copied from a source to a target, identification information (records) about the source is not copied to the target. This is because the source has no identification information in list form, which identifies the source itself. Accordingly, a list cannot be conveniently copied from the source to the target.

### SUMMARY OF THE INVENTION

An object of the present invention is to provide an information processing apparatus that allows a list to be conveniently copied from a source to a target and relieves the user from manually updating a table in a target after a record is copied from a source to the target.

An information processing apparatus (60) copies data from a source to a target. The target includes target identifying information. The source includes a memory (30) configured to store a source-side table (31) that holds a plurality of records. One of the plurality of records contains target identifying information. A copying section (72, 20a, 22a) is configured to delete the one of the plurality of records from the sour-side table, and copy the source-side table (31) into the target after the one of the plurality of records containing target identifying information has been deleted from the source-side table.

A method is used to copy records from a source into a target, the target including target identifying information that identifies the target. The method includes:
deleting one of a plurality of records in a source-side table held in the source, the one of the plurality of records containing the identifying information that identifies the source; and
after deleting the one of the plurality of records the source-side table, copying the source-side table from the source into the target.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow and the accompanying drawings which are given by way of illustration only, and thus are not limiting the present invention, and wherein:
Fig. 1 illustrates the configuration of an information processing apparatus according to a first embodiment of the invention;
Fig. 2 illustrates the hardware of the information processing apparatus shown in Fig. 1;
Fig. 3 illustrates the software in the information processing apparatus shown in Fig. 1;
Fig. 4 illustrates a modification to the software shown in Fig. 3;
Fig. 5 illustrates the content of the telephone directory shown in Fig. 3 before and after copying;
Fig. 6 illustrates the content of the telephone directory shown in Fig. 3 before and after copying;
Fig. 7 is a timing chart illustrating the operation of the information processing apparatus shown in Fig. 1;
Fig. 8 is a flowchart illustrating the processing performed by the apparatus searching program shown in Fig. 3;
Fig. 9 is a follow chart illustrating the processing performed by the telephone directory copying activating program 72 shown in Fig. 3;
Fig. 10 is a flowchart illustrating the processing performed by the telephone directory copying program shown in Fig. 3;
Fig. 11A illustrates the procedure in which a target MFP receives update data and updates a buffer;
Fig. 11B illustrates the procedure in which a source MFP performs the processing after the source MFP has transmitted the update data to the target MFP;
Fig. 12 is a flowchart illustrating the procedure performed by the copy completion notifying section shown in Fig. 3;
Fig. 13 illustrates the software of the information processing apparatus according to a second embodiment;
Fig. 14 is a timing chart illustrating the operation of the information processing apparatus shown in Fig. 13; and
Fig. 15 is a flowchart illustrating the procedure performed by the telephone directory copying program shown in Fig. 13.

### DETAILED DESCRIPTION OF THE INVENTION

The present invention will be described in detail by way of preferred embodiments with reference to the accompanying drawings. It should be understood that the detailed description, specific examples, and drawings, while indicating the preferred embodiment of the invention, are intended for purposes of illustration only and are not intended to limit the scope of the invention.

### First Embodiment

### {Configuration of Image Processing Apparatus}

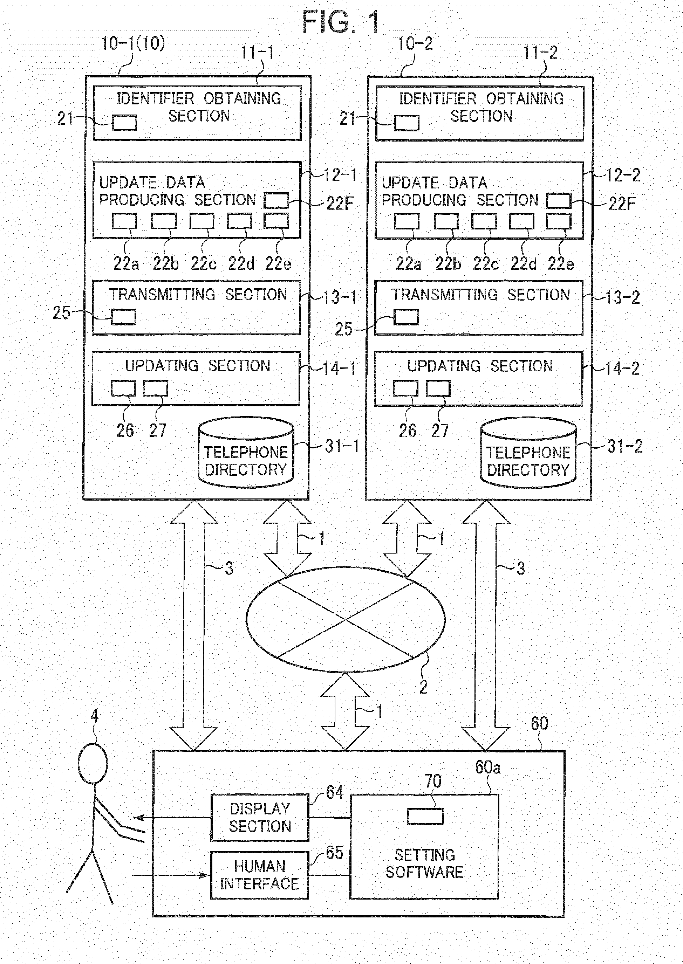

Fig. 1 illustrates the configuration of an information processing apparatus according to a first embodiment of the invention.

The information processing apparatus according to the first embodiment includes a personal computer (PC) 60 and a plurality of multifunction printers, multifunction products, or multifunction peripherals (MFPs) 10-1, 10-2, ... , which are connected to one another through a local area network (LAN) 1 and a network 2. The personal computer and the plurality of multifunction printers function as information processing means.

The MFPs 10-1, 10-2, ... include a copying function for reading the image of an original and receiving a dot image and then printing the image of the original on a recording medium, a scanning function for reading the image of an original, a facsimile function for sending and receiving facsimile messages, and a printing function for printing an image on a recording medium. The PC 60 and MFPs 10-1 and MFP 10-2 may be connected to one another via a universal serial bus (USB) 3 in place of the LAN 1 and network 2.

The MFPs 10-1, 10-2, ... are identical in configuration. The present invention will be described in terms of the MFP 10-1 as a source apparatus and the MFP 10-2 as a target apparatus. Information is copied from the source apparatus to the target apparatus.

Each of the MFP 10-1 and MFP 10-2 has its first identification information (e.g., registered apparatus name expressed by "MFP_No_01" and "MFP_No_02," respectively. Each of the MFP 10-1 and MFP 10-2 also has its own apparatus phone number and registered user name. The apparatus phone number is a telephone number assigned to a corresponding one of the MFP 10-1 and MFP 10-2. The registered user name is the name of a user (e.g., "SMITH") of a corresponding one of the MFP 10-1 and MFP 10-2. The apparatus phone number is used when the facsimile function is performed.

MFP 10-1 has a database (e.g. , telephone directory) 31-1 in the form of a table that contains a plurality of records therein, each record including its apparatus phone number and registered user name; an identifier obtaining section 11-1; an update data producing section 12-1; a transmitting section 13-1; and an updating section 14-1.

The identifier obtaining section 11-1 obtains second identification information (e.g., registered apparatus name representative of the MFP 10-2, which is a target apparatus to which a plurality of records held in the telephone directory 31-1 of the source apparatus are to be copied. The identifier obtaining section 11-1 is implemented by a telephone directory copying program 20a.

The update data producing section 12-1 adds a first record to the end of the records in the telephone directory 31-1, the first record containing entries including the registered user name and the apparatus phone number of the source MFP 10-1. Additionally, the update data producing section 12-1 deletes a second record, which contains entries including the registered user name and the apparatus phone number of the target MFP 10-2, from the plurality of records held in the source MFP 10-1. The update data producing section 12-1, then produces update data 39 (e.g., data to be copied). The update data producing section 12-1 is implemented by a telephone directory information adding program 22b, a target apparatus information deleting program 22c, a number-of-registered telephone numbers determining program 22d, a buffer clearing program 22e, and a write command adding program 22f.

The transmitting section 13-1 transmits the update data 39 to the target MFP 10-2, and is implemented by a data transferring program 25.

Likewise, the target MFP 10-2 includes a telephone directory having the same configuration as the telephone directory 31-2, an identifier obtaining section 11-2, an update data producing section 12-2, a transmitting section 13-2, an updating section 14-2, which have the same configuration as those of the MFP 10-1.

The updating section 14-2 receives the update data 39 from the source MFP 10-1, updates the telephone directory 31-2 in accordance with the received update data 39, and notifies the source MFP 10-1 of completion of the updating of the telephone directory 31-2. The updating section 14-2 is implemented by a data receiving program 27 and a completion-of-data-write notifying program 26.

The PC 60 includes a displaying section 64, a human interface 65, and a setting section 60a. The displaying section 64 displays a variety of notifications to the user 4. The human interface 65 communicates a variety of notifications with the user 4. The setting section 60a is implemented by setting software 70. The setting section 60a obtains the registered apparatus name of the source MFP 10-1 and the registered apparatus name of the target MFP 10-2 from the user 4 through the human interface 65, and then activates the telephone directory copying function of the MFP 10-1.

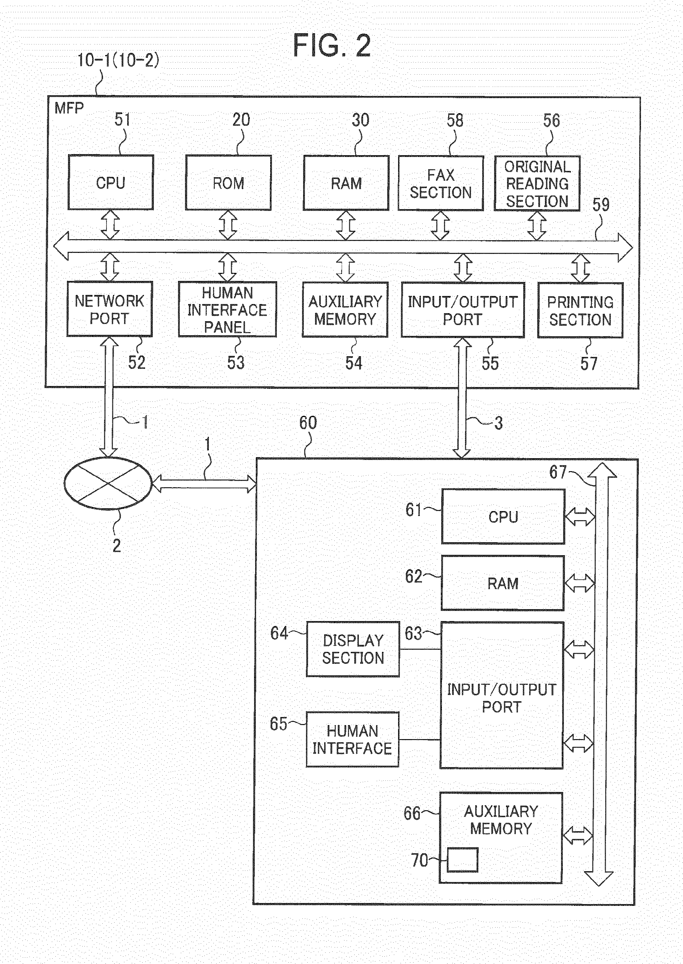

Fig. 2 illustrates the hardware of the information processing apparatus shown in Fig. 1. Each of the MFP 10-1 and MFP 10-2 includes a read only memory (ROM) 20, a random access memory (RAM) 30, a central processing unit (CPU) 51, a network port 52, a human interface panel 53, an auxiliary memory 54, input/output (I/O) port 55, a printing section 57, and a FAX section 58, which are connected to one another via system bus 59.

The ROM 20 stores fixed data and programs executed by the CPU 51. The RAM 30 stores temporary data (i.e., working data) that occurs during the execution of the programs. The CPU 51 controls the entire MFP 10-1 or MFP 10-2 in accordance with the programs stored in the ROM 20.

The network port 52 serves as an interface via which the MFP 10-1 or MFP 10-2 is connected to the network 2 through the LAN 1. The human interface panel 53 includes a display screen that displays information to the user 4 and a human interface unit through which user' s commands are received. The auxiliary memory 54 is a non-volatile memory (e.g., a hard disk drive or HDD), and holds the telephone directory 31 therein. The I/O port 55 serves as an interface via which the MFP 10-1 or MFP 10-2 is connected to the PC 60 over the USB 3.

An original reading section 56 reads an original, and outputs dot image data to the printing section 57. The printing section 57 prints an image on a recording medium, e.g., print paper, in accordance with the dot image data received from the original reading section 56 or the PC 60. The FAX section 58 performs facsimile transmissions.

The PC 60 includes a CPU 61, a RAM 62, and an input/output port 63, and an auxiliary memory 66. The input/output port 63 serves to connect the displaying section 64 and the human interface 65 to the USB 3. The CPU 61, RAM 62, displaying section 64, and human interface 65 communicate with one another via the system bus 67.

The CPU 61 reads a control program from the auxiliary memory 66 into the RAM 62, and performs the overall control of the entire PC 60 based on the control program. The RAM 62 temporarily holds the working data generated when the CPU 61 executes a variety of programs. The display 64 takes the form of a liquid crystal display (LCD), and displays necessary information to the user 4. The human interface 65 takes the form of a key board and/or a mouse, and receives commands from the user 4.

The auxiliary memory 66 takes the form of, for example, an HDD, and holds a variety of programs and fixed data therein.

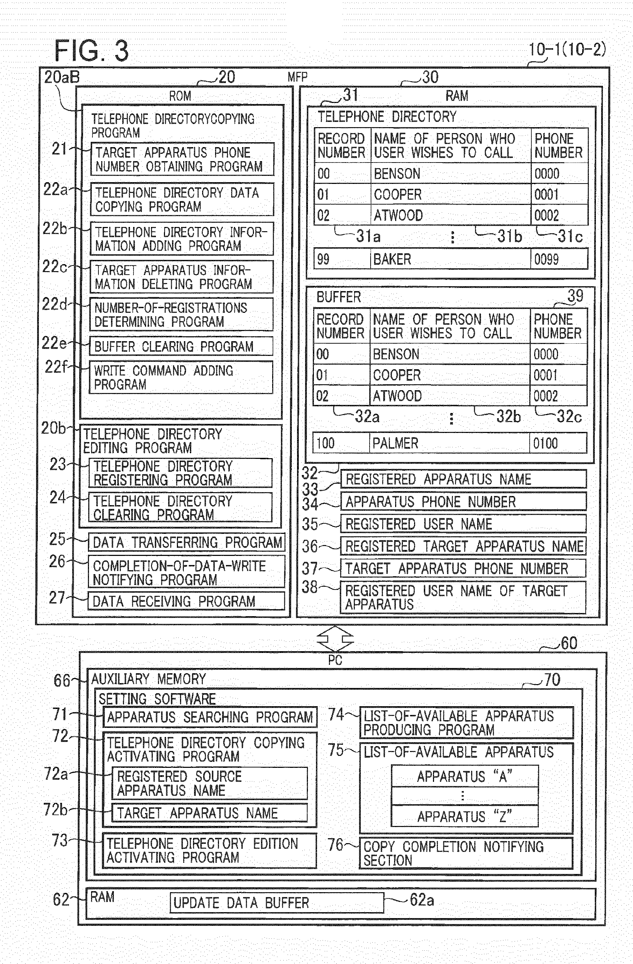

Fig. 3 illustrates the software in the information processing apparatus shown in Fig. 1. The RAM 30 of the MFP 10-1 or MFP 10-2 holds the telephone directory 31 read from the auxiliary memory 54. The telephone directory 31 holds a plurality of records therein. Each record includes a record number 31a that identifies the record, the name of a person who the user wishes to call 31b, and a phone number 31c which is the apparatus phone number 34 of an MFP which the user wishes to call. The name of a person who the user wishes to call is actually the registered user name 35 of the called party.

The RAM 30 includes a buffer 32, a registered apparatus name area, an apparatus phone number area, and a registered user name area. The buffer 32 temporarily holds the update data 39 used for updating the telephone directory 31 of the target apparatus. The registered apparatus name area holds the registered apparatus name 33 of the source apparatus. The apparatus phone number area holds the apparatus phone number 34 of the source apparatus. The registered user name area holds the registered user name 35 of the source apparatus.

The RAM 30 includes a registered target apparatus name area that holds a registered target apparatus name 36, which is the registered apparatus name of the target apparatus, a target apparatus phone number area that holds a target apparatus phone number 37, and a registered user name that holds the registered user name of target apparatus 38.

The ROM 20 of the MFP 10-1 and MFP 10-2 stores the telephone directory copying program 20a, a telephone directory editing program 20b, a data transferring program 25, a completion-of-data-write notifying program 26, and a data receiving program 27.

The telephone directory copying program 20a is executed to copy the telephone directory 31 of the source MFP 10-1 into the telephone directory 31 of the target MFP 10-2. The telephone directory copying program 20a includes a target apparatus phone number obtaining program 21, a telephone directory data copying program 22a, a telephone directory information adding program 22b, a target apparatus information deleting program 22c, a number-of-registrations determining program 22d, a buffer clearing program 22e, and a write command adding program 22f.

The target apparatus phone number obtaining program 21 is executed to obtain the target apparatus phone number 37 and the registered user name of the target apparatus 38 of the target MFP 10-2. The telephone directory data copying program 22a is executed to copy the telephone directory 31 of the source MFP 10-1 into the buffer 32. The telephone directory information adding program 22b is executed to add a record that contains the apparatus phone number 34 and the registered user name 35 into the update data 39 copied by the telephone directory data copying program 22a. The target apparatus information deleting program 22c is executed to delete a record that contains the target apparatus phone number 37 and the registered user name of the target apparatus 38 of the target MFP 10-2 from the update data 39 produced by the telephone directory data copying program 22a.

The number-of-registrations determining program 22d determines whether the number of records of the update data 39 saved in the buffer 32 is in excess of a predetermined value, which is the maximum number of records that can be registered with the telephone directory 31 of the MFP 10-1 or MFP 10-2. The maximum number of records may be registered in advance through, for example, the human interface 65 and stored in the auxiliary memory 66 of the PC 60. The maximum number may also be stored in advance in the auxiliary memory 54 in the MFP 10-1 or MFP 10-2. The buffer clearing program 22e deletes the update data 39 from the buffer 32. The write command adding program 22f adds a telephone directory updating command to the update data 39 saved in the buffer 32.

A telephone directory editing program 20b is constituted of a telephone directory registering program 23 and a telephone directory clearing program 24. The telephone directory registering program 23 updates the telephone directory 31 of the target MFP 10-2 in accordance with the update data 39 received from the source MFP 10-1. The telephone directory clearing program 24 deletes a record from the update data 39. A data transferring program 25 transmits the update data 39, which is produced by the telephone directory data copying program 22a, to the target MFP 10-2.

The completion-of-data-write notifying program 26 notifies the source MFP 10-1 as a target apparatus that the telephone directory registering program 23 has completed updating of the telephone directory 31. The data receiving program 27 receives the update data 39 from the source MFP 10-1.

An auxiliary memory 66 in the PC 60 has the setting software 70 therein. The setting software 70 includes an apparatus searching program 71, a telephone directory copying activating program 72, a telephone directory edition activating program 73, and a list-of-available apparatus producing program 74. The apparatus searching program 71 searches the MFPs 10 registered with a list-of-available apparatus 75. The telephone directory copying activating program 72 has a registered source apparatus name area that holds the registered source apparatus name 72a of the source MFP 10-1, and a target apparatus name area that holds the target apparatus name 72b of the target MFP 10-2. The telephone directory copying activating program 72 activates the telephone directory copying program 20a of the source MFP 10-1.

The telephone directory edition activating program 73 activates the telephone directory editing program 20b of the source MFP 10-1. The list-of-available apparatus producing program 74 searches the MFPs connected via the USB 3 or LAN 1 to obtain the registered apparatus name 33. The list-of-available apparatus 75 holds the results searched by the list-of-available apparatus producing program 74. A copy completion notifying section 76 notifies the user 4 that the telephone directory copying program 20a has completed its processing. The RAM 62 in the PC 60 has an update data buffer 62a that temporarily holds the content of the buffer 32 which is to be displayed on the PC 60.

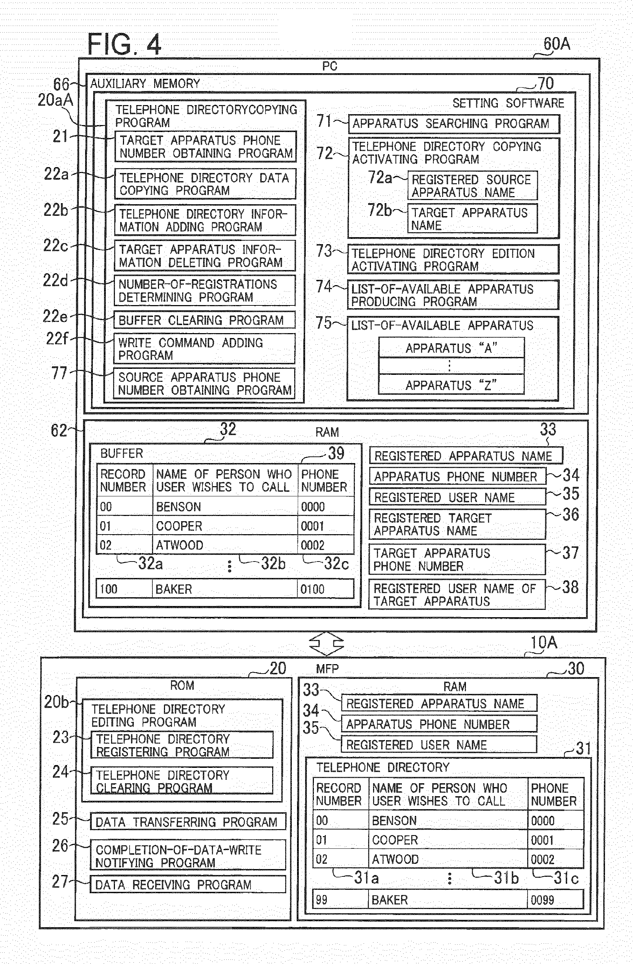

Fig. 4 illustrates a modification to the software shown in Fig. 3. The auxiliary memory 66 of the PC 60 has a telephone directory copying program 20aA which in turn has a source apparatus phone number obtaining program 77 in addition to the other program shown in Fig. 3. The source apparatus phone number obtaining program 77 obtains the apparatus phone number 34 of the source MFP 10-1 from the human interface 65.

The RAM 62 in the PC 60 includes a buffer 32, a registered source apparatus name area, a source apparatus phone number area, a registered user name of source apparatus area, a target apparatus name area, a target apparatus phone number area, and a registered user name area. The registered source apparatus name area holds the registered source apparatus name 33 therein. The source apparatus phone number area holds the apparatus phone number 34 of the source MFP 10-1. The registered user name of source apparatus area holds the registered user name 35 of the source MFP 10-1. The registered target apparatus name area holds the registered target apparatus name 36 of the target MFP. The target apparatus phone number area holds the target apparatus phone number 37 of the target MFP 10-2. The registered user name area holds the registered user name of target apparatus 38 therein.

The MFP 10A has the same software configuration as the MFP 10-1 or MFP 10-2 shown in Fig. 3 except that the MFP 10A does not include, for example, the telephone directory copying program 20a and the buffer 32.

### {Operation of First Embodiment}

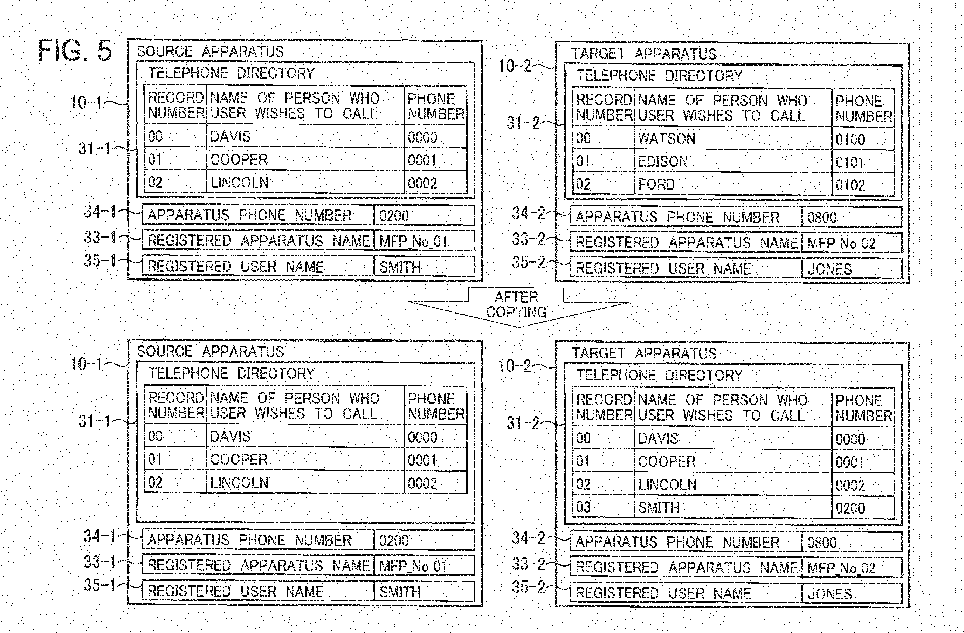

Fig. 5 illustrates the content of the telephone directory 31 shown in Fig. 3 before and after copying.

The upper left portion of Fig. 5 illustrates the RAM 30 of the source MFP 10-1 immediately before copying. The upper right portion of Fig. 5 illustrates the RAM 30 of the target MFP 10-2 immediately before copying. The lower left portion of Fig. 5 illustrates the RAM 30 of the source MFP 10-1 immediately after copying. The lower right portion of Fig. 5 illustrates the RAM 30 of the target MFP 10-2 immediately after copying. The 31-1 of the source MFP 10-1 shown in Fig. 5 does not have a record that contains the registered user name 35-2 and the apparatus phone number 33-2.

The telephone directory copying program 20a overwrites the content of the telephone directory 31-1 of the source MFP 10-1 onto the content of the telephone directory 31-2 of the target MFP 10-2, and therefore, the content of the telephone directory 31-2 of the target MFP 10-2 before copying is lost. When copying, the telephone directory copying program 20a adds to the update data 39 the content of the telephone directory 31-1 of the source MFP 10-1, "SMITH" which is the registered user name 35-1 of the source MFP 10-1, and "0200" which is the apparatus phone number 34-1 of the source MFP 10-1. Thus, the telephone directory 31-2 of the target MFP 10-2 after copying holds a record number "03", "SMITH" which is the name of a person or the source MFP 10-1 that the user of the MFP 10-2 wishes to call, and a number "0200" which is the phone number for "SMITH".

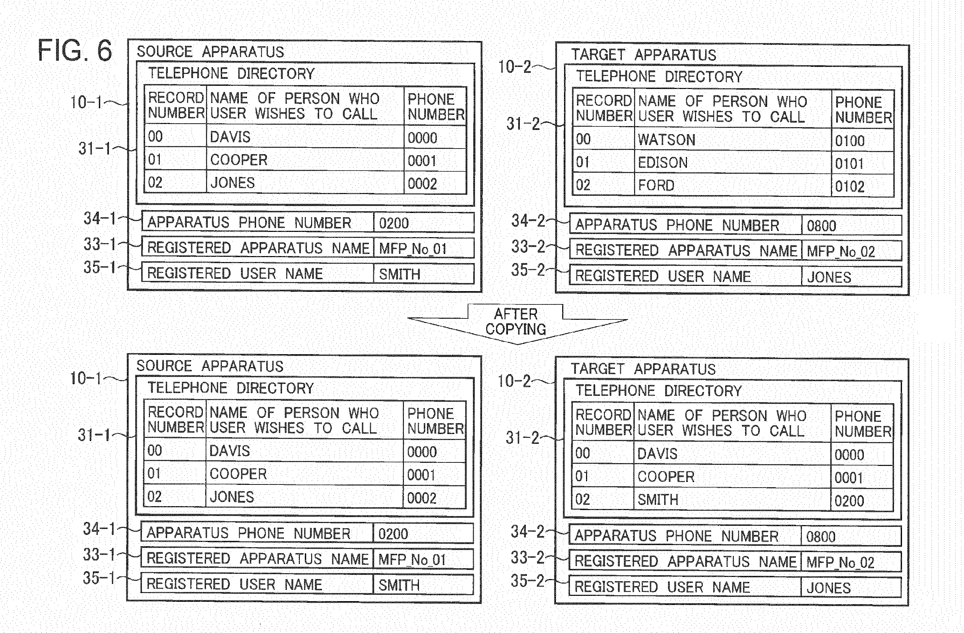

Fig. 6 illustrates the content of the telephone directory 31 shown in Fig. 3 before and after copying.

The telephone directory 31-1 of the source MFP 10-1 has a record containing "JONES" which is the registered user name 35-2 and "0800" which is the apparatus phone number 33-2. When copying is performed from the source MFP 10-1 to the target MFP 10-2, "JONES" and "0800" are first deleted from the update data 39, and then a record number "02", "SMITH" which is the name of a person who the user wishes to call, and "0200" which is the phone number for the person who the user wishes to call are added to the update data 39.

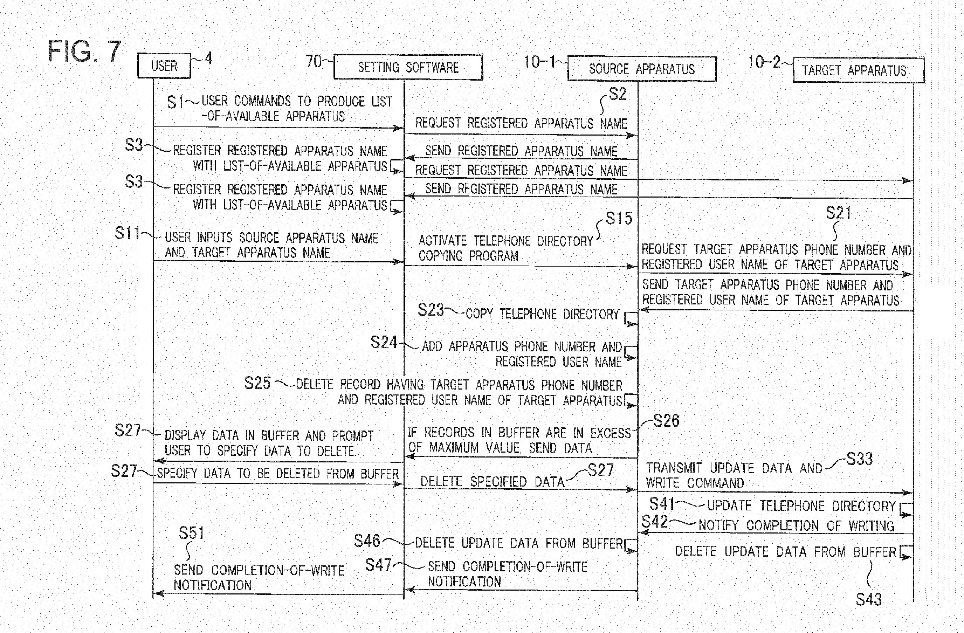

Fig. 7 is a timing chart illustrating the operation of the information processing apparatus shown in Fig. 1. At S1, the list-of-available apparatus producing program 74 of the setting software 70 of the PC 60 is activated in response to a command to produce a list-of-available apparatus from the user 4. At S2, the setting software 70 requests the registered apparatus names 33 of the MFP 10-1 and MFP 10-2 connected to the network 2. The MFPs 10-1 and 10-2 send their registered apparatus names in response to the request from the setting software 70. At S3, upon reception of the registered apparatus names 33, the setting software 70 registers the registered apparatus names 33 with the list-of-available apparatus 75.

At S11, the telephone directory copying activating program 72 receives the source apparatus name 72a and the target apparatus name 72b from the user 4 via the human interface 65 of the PC 60, and searches the list-of-available apparatus 75 to find an MFP with which the source apparatus name 72a received from the user 4 has been registered. If such an MFP exists (YES at S12), the program proceeds to S15.

At S15, the telephone directory copying activating program 72 activates the telephone directory copying program 20a in the MFP 10-1. The telephone directory copying program 20a obtains the registered target apparatus name 36 of the target MFP 10-2 from the setting software 70. At S21, the target apparatus phone number obtaining program 21 obtains the target apparatus phone number 37 and the registered user name of target apparatus 38 from the target MFP 10-2.

At S23, the telephone directory copying program 20a causes the telephone directory data copying program 22a to copy all of the records held in the telephone directory 31-1 into the buffer 32. At S24, the telephone directory copying program 20a adds a record that contains the apparatus phone number 34 and the registered user name 35 into the buffer 32. At S25, the telephone directory copying program 20a deletes a record having the target apparatus phone number 37 and the registered user name of target apparatus 38 from the buffer 32.

At S26, the telephone directory copying program 20a causes the number-of-registrations determining program 22d to determine whether the number of records in the update data 39 saved in the buffer 32 has exceeded the maximum value. If the buffer 32 holds records in excess of the maximum value, then at S27, the number-of-registrations determining program 22d causes the operation panel 53 to display that the number of records has exceeded the maximum value, thereby prompting the user 4 to delete unnecessary records. Using the telephone directory clearing program 24, the number-of-registrations determining program 22d deletes a record that is commanded to be deleted.

At S33, when the update data 39 is ready to be saved in the telephone directory 31-2, the MFP 10-1 transmits the update data 39 and write command to the target MFP 10-2, using the data transferring program 25. At S41, the target MFP 10-2 causes the data receiving program 27 to receive the update data 39, and then updates the telephone directory 31-2. At S42, when the telephone directory 31-2 has been updated, the MFP 10-2 notifies the MFP 10-1 of the completion of writing, using the completion-of-data-write notifying program 26. At S43, the buffer clearing program 22e deletes the update data 39 from the buffer 32.

Upon reception of completion-of-write notification, the source MFP 10-1 deletes the update data 39 from the buffer 32 of the MFP 10-1, using the buffer deleting program 22e.

At S47, the MFP 10-1 notifies the setting software 70 of the completion of the copying of the telephone directory 31. At S51, using the copy completion notifying section 76, the setting software 70 causes the display 64 to display the completion of writing of the update data 39, thereby indicating to the user 4 that the telephone directory 31 has been successfully copied.

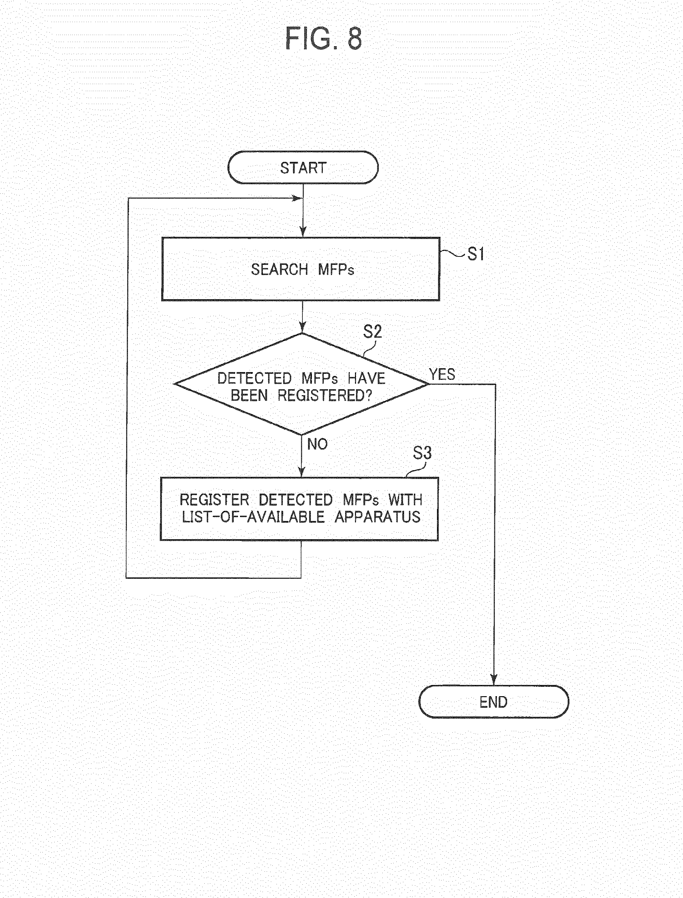

Fig. 8 is a flowchart illustrating the processing performed by the apparatus searching program 71 shown in Fig. 3.

When the user 4 operates the human interface 65 of the PC 60 to activate the apparatus searching program 71, the flowchart starts. The steps S1-S3 correspond to the steps S1-S3 shown in Fig. 7.

At S1, the apparatus searching program 71 of the PC 60 starts to make a list-of-available apparatus, and performs broadcasting to a plurality of MFPs connected to the LAN 1 or USB 3, thereby detecting the MFPs. The program then proceeds to S2. At S2, the apparatus searching program 71 determines whether the detected MFPs have been registered with the list-of-available apparatus 75. If the detected MFPs have not been registered (NO), the program proceeds to S3 where the apparatus searching program 71 registers the detected MFPs with the list-of-available apparatus 75, and then returns to S2. At S2, if all of the detected MFPs 10 have been registered (YES), the program ends.

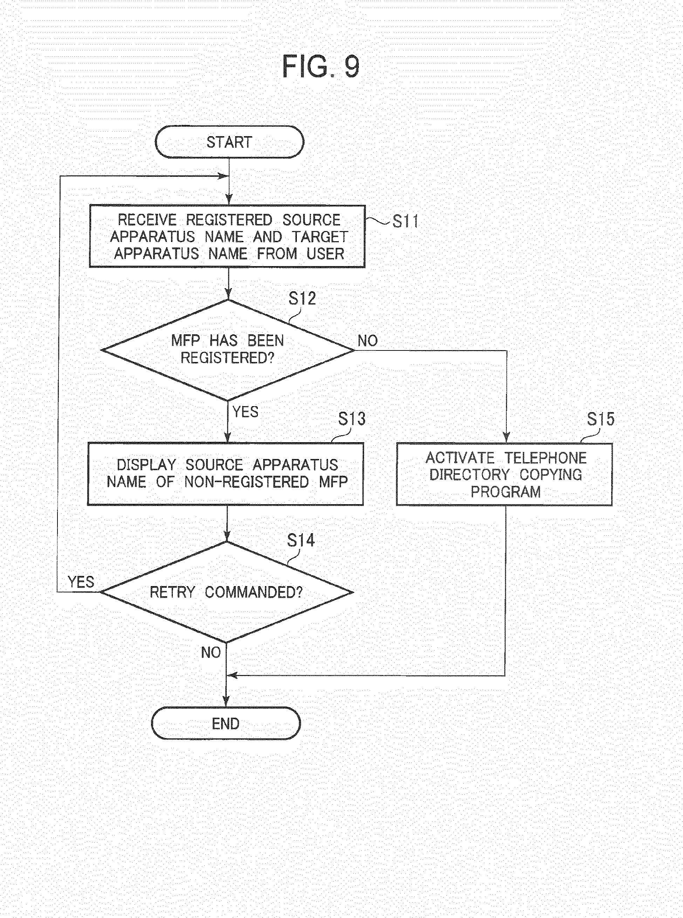

Fig. 9 is a follow chart illustrating the processing performed by the telephone directory copying activating program 72 shown in Fig. 3. The steps S11 and S15 correspond to the steps S11 and S15 shown in Fig. 7.

The user 4 operates the human interface 65 of the PC 60, causing the telephone directory copying activating program 72 to start.

At S11, the telephone directory copying activating program 72 receives the registered source apparatus name 72a and the target apparatus name 72b via the human interface 65 of the PC 60. The program then proceeds to S12. At S12, the telephone directory copying activating program 72 searches the list-of-available apparatus 75 to determine whether an MFP corresponding to the inputted source apparatus name 72a has been registered with the list-of-available apparatus 75. If YES, the program proceeds to S15. If NO, the program proceeds to S13.

As S15, the telephone directory copying activating program 72 activates the telephone directory copying program 20a of the source MFP 10-1, and then notifies the source MFP 10-1 a target MFP having the target apparatus name 72b. At S13, the telephone directory copying activating program 72 causes the display 64 to display the source apparatus name 72a of the non-registered MFP, prompting the user 4 to decide whether the copying should be aborted. The program then proceeds to S14. At S14, if the user 4 commanded retry to change the non-registered source apparatus name 72a that has been inputted (YES), the program returns to S11. If the user 4 does not command retry (NO), then the program ends.

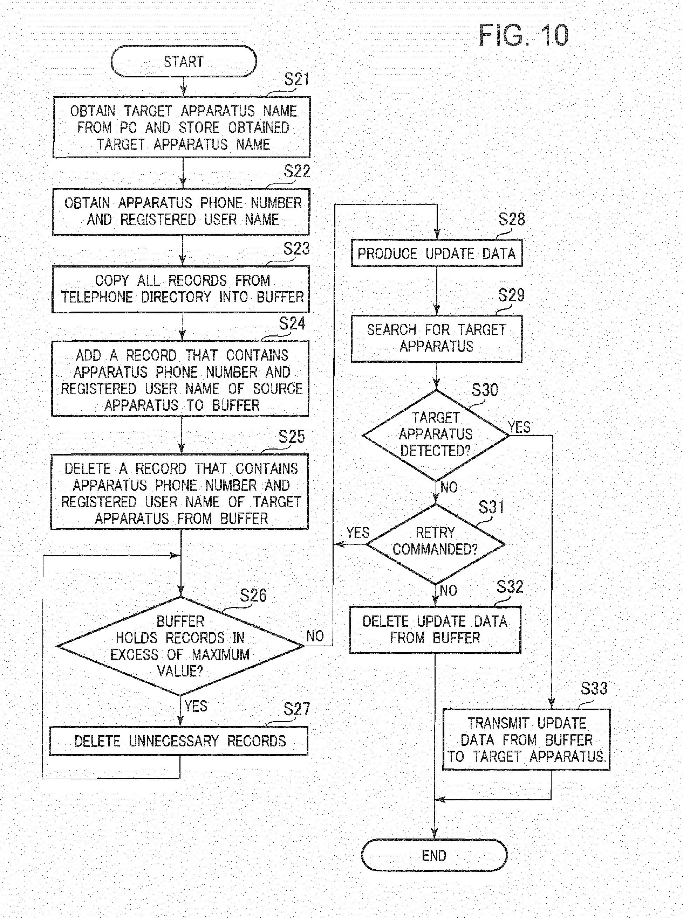

Fig. 10 is a flowchart illustrating the processing performed by the telephone directory copying program 20a shown in Fig. 3. The steps S21, S23-S27, and S33 correspond to the steps S21, S23-S27, and S33 shown in Fig. 7.

The user 4 operates the human interface 65 of the PC 60 to start the telephone directory copying program 20a.

At S21, the telephone directory copying program 20a obtains the target apparatus name 72b from the setting software 70 of the PC 60, stores the obtained target apparatus name 72b as the registered target apparatus name 36 into the RAM 30. The program then proceeds to S22. At S22, by using the target apparatus phone number obtaining program 21, the telephone directory copying program 20a obtains the apparatus phone number and registered user name from the target MFP 10-2. The telephone directory copying program 20a then stores into the RAM 30 the apparatus phone number of the target MFP 10-2 as a target apparatus phone number 37 into the RAM 30, and the registered user name 35 of the target MFP 10-2 as registered user name of target apparatus 38. The program then proceeds to S23.

At S23, using the telephone directory data copying program 22a, the telephone directory copying program 20a copies all of the records held in the telephone directory 31 into the buffer 32. The program then proceeds to S24.

At S24, using the telephone directory information adding program 22b, the telephone directory copying program 20a obtains the apparatus phone number 34 and the registered user name 35 from the RAM 30, and produces a record that contains the apparatus phone number 34 and the registered user name 35. The telephone directory copying program 20a then adds the record to the end of the update data 39 held in the buffer 32. The program then proceeds to S25.

At S25, by using the target apparatus information deleting program 22c, the telephone directory copying program 20a deletes a record that contains the target apparatus phone number 37 and the registered user name of target apparatus 38 from the update data 39 stored in the buffer 32. The program then proceeds to S26.

At S26, by using the number-of-registrations determining program 22d, the telephone directory copying program 20a makes a decision to determine whether the buffer 32 holds the update data 39 that contains records in excess of a predetermined maximum value. If the buffer 32 holds records in excess of the maximum value, then the program proceeds to S27. If the buffer 32 does not hold records in excess of the maximum value, the program proceeds to S28. At S27, the number-of-registrations determining program 22d causes the operation panel 53 to display that the number of records has exceeded the maximum value, thereby prompting the user 4 to delete unnecessary records. Using the telephone directory clearing program 24, the number-of-registrations determining program 22d deletes a record in response to a command from the user 4.

At S28, the telephone directory copying program 20a causes the write command adding program 22f to add a write command to the update data 39 stored in the buffer 32. The program then proceeds to S29.

At S29, the telephone directory copying program 20a searches for a target MFP 10-2 connected to the LAN 1 or the USB 3. At S30, if a target MFP 10-2 is detected (YES), the program proceeds to S33. If a target MFP 10-2 is not detected (NO), the program proceeds to S31. At S31, the telephone directory copying program 20a causes the operation panel 53 to display that a target MFP 10-2 is not connected to the LAN 1 or USB 3, thereby prompting the user 4 to decide whether the search should be retried. If the user 4 commands to retry (YES), the program returns to S28. If the user 4 does not command to retry (NO), the program proceeds to S32.

At S32, the telephone directory copying program 20a causes the buffer clearing program 22e to delete the update data 39 from the buffer 32. The program then ends. At S33, the data transferring program 25 transmits the update data 39 from the buffer 32 to the target MFP 10-2, thereby ending the copying of the telephone directory.

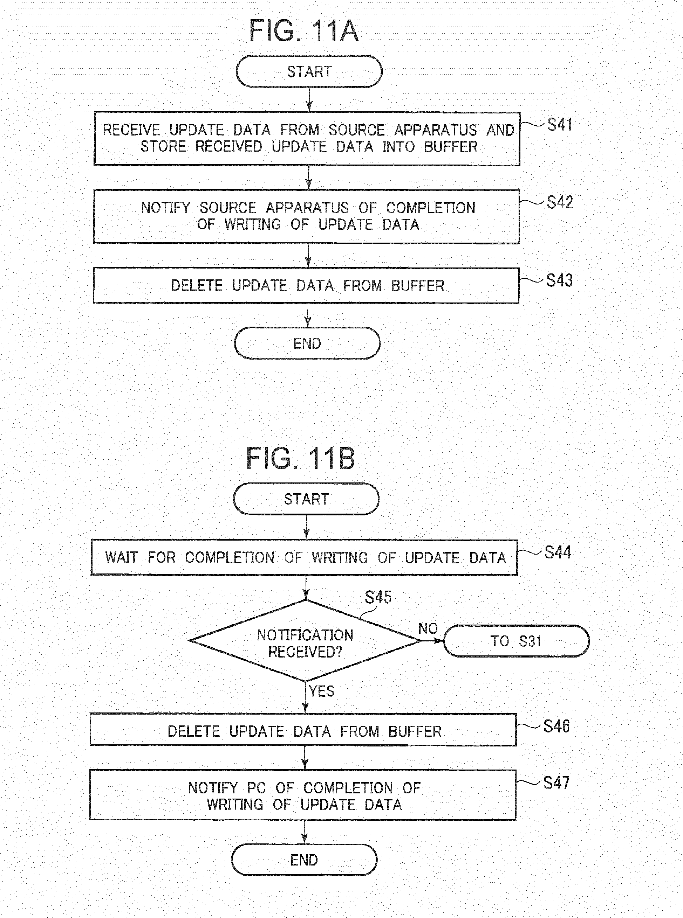

Figs. 11A and 11B are flowcharts illustrating the processes performed by the data receiving program 27, the telephone directory registering program 23, a data-write completion notifying program 26, and a telephone directory clearing program 24. The steps S41, S43, S46, and S47 correspond to the steps S41, S43, S46, and S47 shown in Fig. 7.

Fig. 11A illustrates the procedure in which the target MFP 10-2 receives the update data 39 and updates the buffer 32. Fig. 11B illustrates the procedure in which the source MFP 10-1 performs the processing after the source MFP 10-1 has transmitted the update data 39 to the target MFP 10-2.

At S41, the data receiving program 27 in the target MFP 10-2 receives the update data 39 from the source MFP 10-1 and stores the received update data 39 into the buffer 32 of the target MFP 10-2. Further, in accordance with the write command embedded in the update data 39, the data receiving program 27 writes the update data 39 into the telephone directory 31 of the target MFP 10-2.

At S42, the completion-of-data-write notifying program 26 in the target MFP 10-2 sends a notification to the source MFP 10-1, notifying completion of the writing of the update data 39. The program then proceeds to S43. At S43, the telephone directory copying program 20a in the target MFP 10-2 causes the buffer clearing program 22e to delete the update data 39 from the buffer 32. The program then ends.

At S44, the telephone directory copying program 20a in the source MFP 10-1, which has transmitted the update data 39 to the target MFP 10-2 at S33, waits for the notification, which is sent from the target MFP 10-2 and notifies completion of the writing of the update data 39. At S45, once the telephone directory copying program 20a in the source MFP 10-1 receives the notification (YES), the program proceeds to S46. If the notification has not been received within a predetermined time frame (NO), the program proceeds to S32.

At S46, the telephone directory copying program 20a in the source MFP 10-1 causes the buffer clearing program 22e to delete the update data 39 from the buffer 32. The program then proceeds to S47. At S47, the completion-of-data-write notifying program 26 notifies the setting software 70 of the PC 60 of completion of the writing of the update data 39. The program then ends.

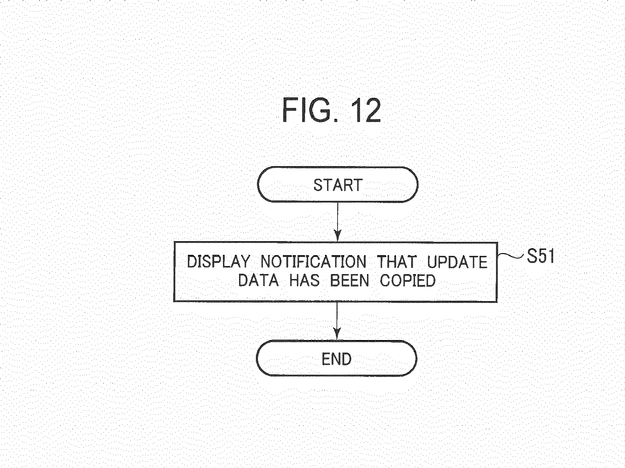

Fig. 12 is a flowchart illustrating the procedure performed by the copy completion notifying section 76 shown in Fig. 3. The step S51 corresponds to the step S51 shown in Fig. 7.

Upon reception of the notification that the update data 39 has been written from the source MFP 10-1, the copy completion notifying section 76 starts the procedure.

At S51, the setting software 70 of the PC 60 drives the display section 64 via the copy completion notifying section 76, thereby displaying a notification that the update data 39 has been written.

### {Effects of First Embodiment}

When the telephone directory 31 is copied, a record that contains the apparatus phone number 34 and the registered user name 35 of the source MFP 10-1 are added to the update data 39. In addition, a record is deleted from the update data 39 which contains the target apparatus phone number 37 and the registered user name of target apparatus 38 of the target apparatus MFP 10-2. This configuration eliminates the user's manual operation in updating the telephone directory after copying, relieving the user 4 of cumbersome operations.

### Second Embodiment

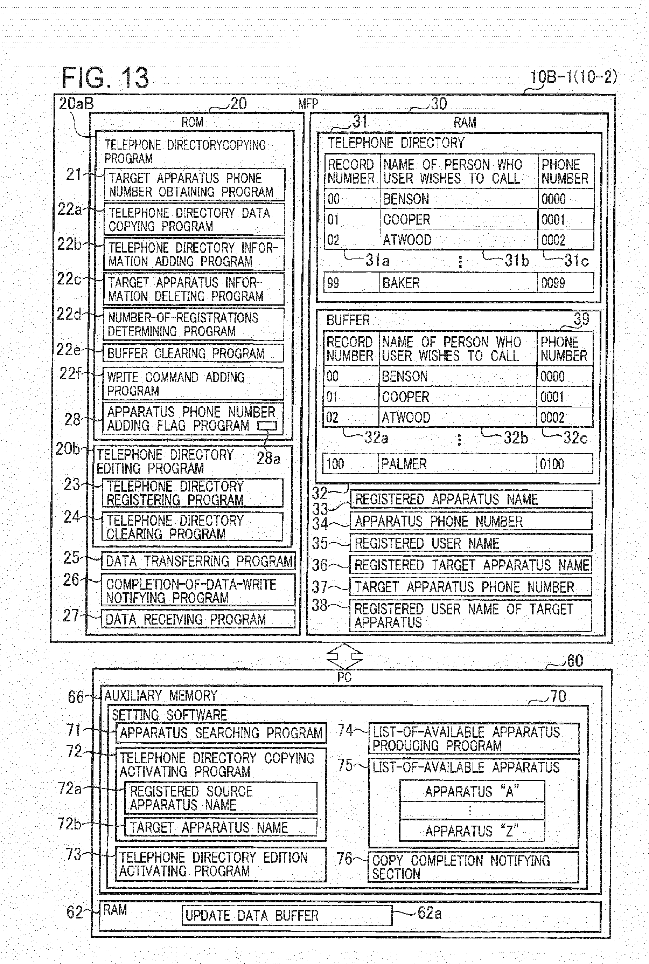

Fig. 13 illustrates the software of the information processing apparatus according to a second embodiment.

The information processing apparatus according to the second embodiment is constituted of a PC 60 similar to that of the first embodiment and MFP 10B-1 and MFP 10B-2 different from the MFP 10-1 and MFP 10-2, respectively, of the first embodiment.

The MFP 10B-1 and MFB 10B-2 have substantially the same configuration as the first embodiment except that an apparatus phone number adding flag program 28 is incorporated. The apparatus phone number adding flag program 28 receives a command to add or not to add a record that contains an apparatus phone number 34 and a registered user name 35 into update data 39, and then stores the received command as a determination information 28a, e.g., apparatus phone number adding flag.

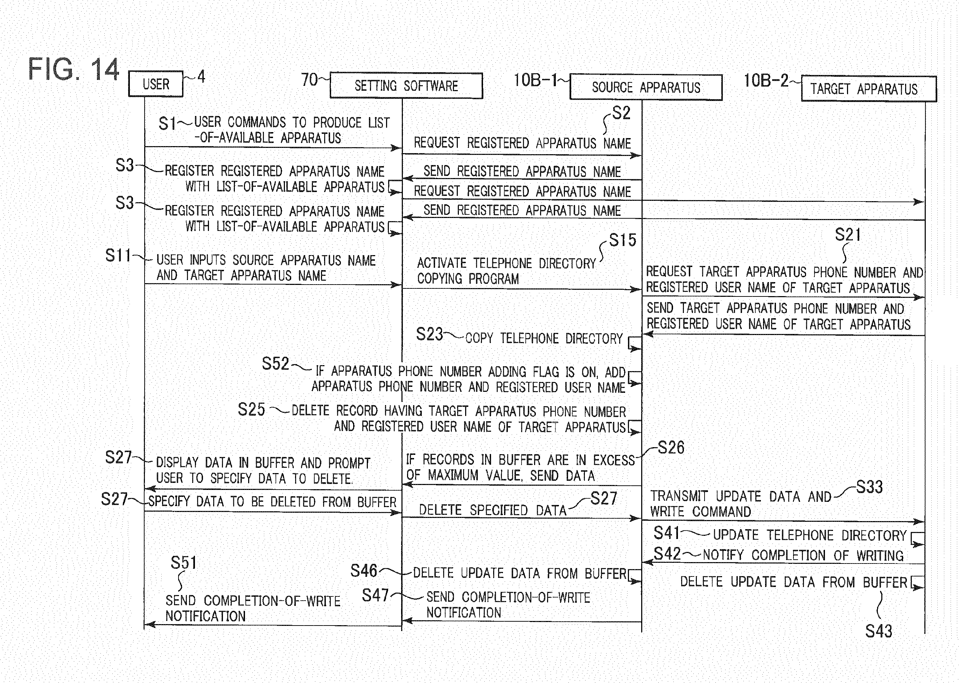

Fig. 14 is a timing chart illustrating the operation of the information processing apparatus shown in Fig. 13. Steps common to those of the first embodiment have been given common reference numerals.

The operation of the information processing apparatus according to the second embodiment differs from the first embodiment in that a step S52 is added.

Just as in the first embodiment, at S23, all of the records in a telephone directory 31 are copied into a buffer 32. Then, at S52, a check is made to determine the state of an apparatus phone number adding flag 28a. If the apparatus phone number adding flag 28a is ON, the record that contains an apparatus phone number 34 and a registered user name 35 is added to the update data 39. The remainder of the operation is the same as that of the first embodiment.

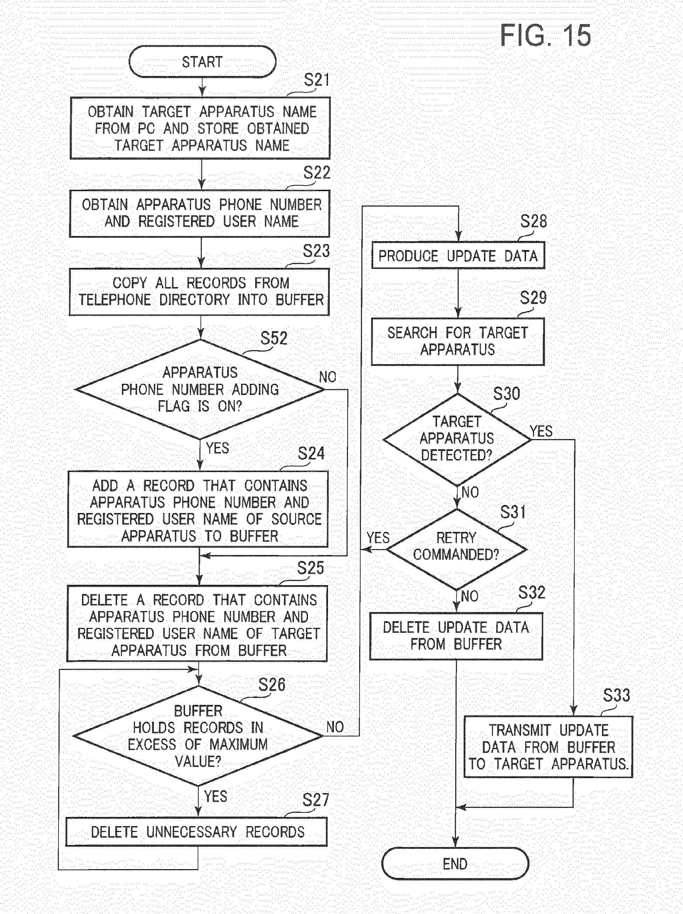

Fig. 15 is a flowchart illustrating the procedure performed by a telephone directory copying program 20aB shown in Fig. 13. Steps common to those of the first embodiment have been given common reference numerals.

The telephone directory copying program 28aB differs from the telephone directory copying program 20a in that a step S52 is added. The remainder of the processing is substantially the same as that of the first embodiment. The step S52 is the same as that described with reference to Fig. 14.

### {Effects of Second Embodiment}

The second embodiment provides the same effects as the first embodiment. Additionally, the second embodiment allows the user 4 to decide whether the apparatus phone number 34 and the registered user name 35, which are private information, should be registered with the telephone directory 31. Therefore, the private information can be reasonably protected.

### Modification

The present invention is not limited to the above-described embodiments but can be modified in a variety of ways. Specific modifications may include the following.

### Modification (a)

The first and second embodiments have been described with respect to the PC 60 and MFPs 10-1 and 10-2 as information processing means. The information processing means may also be a cellular phone, a facsimile machine, a copying machine, or an application program that runs on a computer.

For example, a PC may incorporate a first application program (e.g., the programs shown in Figs. 3, 4, and 13) that plays the role of the source apparatus MFP 10-1, a second application program (e.g., the programs shown in Figs. 3, 4, and 13) that plays the role of the target apparatus MFP 10-2, and a third application program (e.g., the programs shown in Figs. 3, 4, and 13) that plays the role of PC 60, so that a list or a table containing records is copied, for example, from the first application program into the second application program.

### Modification (b)

The update data producing section 12-1 of the source MFP 10-1 registers the apparatus phone number 34 and the registered user name 35 with the telephone directory 31, and deletes the target apparatus phone number 37 and the registered user name of target apparatus 38 from the telephone directory 31. These two functions may also be performed by the updating section 14-1 of the target MFP 10-2.

### Modification (c)

The first and second embodiments have been described in terms of the telephone directory 31 in the form of a list as a database. The database may also be a relational model.

### Modification (d)

As is clear from Fig. 6, the updating section 14-2 of the first and second embodiments overwrites the update data 39 onto the telephone directory 31 of the target apparatus. Therefore, the record of "WATSON," "EDISON," and "FORD" of the target apparatus are lost. However, the updating section 14-2 may be configured such that when the telephone directory 31-2 holds the same records as the update data 39, the record is not overwritten, and such that when the telephone directory 31-2 does not hold the same records as the update data 39, the record is simply added. For example, the source apparatus whose registered user name is "a" had a list "b", "c" "d" "e" and "h," and the target apparatus whose registered user name had a list "f", "g" and "h," the target apparatus would have lists "a," "b," "c," "d," "f," "g," and "h."

In other words, the list "a" of the source apparatus is added and the list "e" of the target apparatus is deleted. Further, the list "h" in both the source and target apparatus are deleted. If copying were performed without using the modification, the list after copying would be "b," "c," "d," "e," "'h,"' "f," "g," and "h".

### Modification (e)

The first and second embodiments have been described in terms of a telephone directory as a database. The database may also be an address book for email.

### Modification (f)

The source MFP 10-1 or the target MFP 10-2 may incorporate the setting software 70 so that the source MFP 10-1 or the target MFP 10-2 may perform the processing performed by the PC 60: search for apparatus, activation of the telephone directory copying program, and notification that copying has completed.

## Claims

1. An information processing apparatus (60) configured to copy data from a source to a target:
wherein the target comprises target identifying information (MFP No. 02, application "B");
wherein the source comprises:
a memory (30) configured to store a source-side table (31) that holds a plurality of records, one of the plurality of records containing target identifying information (MFP No. 01, application "A"); and
a copying section (72, 20a, 22a) configured to delete the one of the plurality of records containing target identifying information from the source-side table, and to copy the source-side table (31) into the target after the one of the plurality of records containing target identifying information has been deleted from the source-side table.

2. The information processing apparatus (60) according to claim 1, wherein the source includes source identifying information (MFP No. 01, application "A") that identifies the source, and the records are first records;
wherein before the copying section (72, 20a, 22a) copies the source-side table (31) into the target, the copying section (72, 20a, 22a) adds a second record to the source-side table (31), the second record containing the source identifying information.

3. The information processing apparatus according to claim 2, wherein the target includes a target-side table that holds a plurality of records therein;
wherein the copying section (72, 20a, 22a) deletes from the source-side table a third record that contains the same record identifying information as a record held in the target-side table, and then adds all records held in the source-side table to the records in the target-side table, after deletion of the third record.

4. The information processing apparatus according to any one of claims 1 to 3, wherein the source-side table is a telephone directory.

5. The information processing apparatus according to any one of claims 1 to 3, wherein the source-side table is an address book for email.

6. The information processing apparatus according to any one of claims 1 to 5, wherein the source is a source apparatus connected to the information processing apparatus and the target is a target apparatus connected to the information processing apparatus, the information processing apparatus further comprises:
a searching section (71) configured to search apparatuses connected to the information processing apparatus, and register detected apparatuses with an apparatus list (75);
a human interface (65) through which a user inputs a command to specify a source apparatus and a target apparatus;
a displaying section (64);
a determining section (72) configured to determine whether the specified source apparatus and the target apparatus have been registered with the apparatus list (75);
wherein when the specified source apparatus and target apparatus have been registered with the apparatus list (75), the copying section (22a) copies the source-side table into the target-side table;
wherein when at least one of the specified source apparatus and the target apparatus has not been registered with the apparatus list (75), the displaying section (64) displays to the user that the at least one of the specified source apparatus and the target apparatus have not been registered with the apparatus list (75).

7. The information processing apparatus according to any one of claims 1 to 5, further comprising:
a determining section (22d) configured to determine whether a number of records in the source-side table is in excess of a threshold value;
wherein when the number of records in the source-side table is in excess of the threshold value, the determining section allows the human interface (65) to receive a command to delete one of the records from the source-side table;
wherein the copying section (22a) deletes the one of the records from the source-side table in response to the command.

8. The information processing apparatus according to any of the preceding claims, wherein the source and the target are located in the information processing apparatus, or wherein the source and the target are located outside of the information processing apparatus.

9. A method of copying records from a source into a target, the target including target identifying information (MFP No. 01) that identifies the target apparatus, the method comprising:
deleting one of a plurality of records from a source-side table held in the source, the one of the plurality of records containing identifying information that identifies the source; and
after deleting the one of the plurality of records from the source-side table, copying the source-side table from the source into the target.

10. The method according to claim 9, wherein the source includes source identifying information (MFP No. 02), the records are first records, wherein the method further comprises:
before copying the source table (31) into the target, adding a second record to the source-side table (31), the second record containing the source identifying information.

11. The method according to claim 10, further comprising:
deleting from the source-side table a third record that contains the same record identifying information as a record held in the target-side table; and
copying all records held in the source-side table into the target after deleting the third record.

12. The method according to any one of claim 9 to 11, wherein the source-side table is a telephone directory.

13. The method according to any one of claims 9 to 11, wherein the source-side table is an address book for email.

14. The method according to any one of claims 9 to 11, wherein the source is an apparatus connected to an information processing apparatus, the target is one of apparatus connected to the image processing apparatus, the method further comprising:
searching apparatus connected to the image processing apparatus;
registering the detected apparatus with an apparatus list (75);
specifying a source apparatus and a target apparatus;
determining whether the specified source apparatus and target apparatus have been registered with the apparatus list (75);
determining whether the specified source apparatus and target apparatus have been registered with the apparatus list (75);
copying the source-side table into the target apparatus when the specified source apparatus and target apparatus have been registered with the apparatus list (75);
displaying, when at least one of the specified source apparatus and target apparatus has not been registered with the apparatus list (75), that at least one of the specified source apparatus and the target apparatus has not been registered with the apparatus list (75).

15. The method according to any one of claims 9 to 11, further comprising:
determining whether a number of records in the source-side table is in excess of a threshold value;
receiving a command to delete a record in the source-side table when the number of records in the source-side table is in excess of a threshold value; and
deleting any of records in excess of the threshold value in response to the command.
